# EUROPEAN PATENT SPECIFICATION

(11) **EP 0 709 327 B1**
(45) Date of publication and mention of the grant of the patent: **05.01.2000**
(21) Application number: 95116838.4
(22) Date of filing: 26.10.1995
(51) Int. Cl.: B65H 16/06, F16D 1/10, F16D 1/116

(54) **Quick-release end support, particularly for roll supporting shafts**
Schnell-Löseendhalterung, insbesondere für Rollenabstützwellen
Support d'extrémité de deserrage rapide, notamment pour arbre porteur de rouleaux

(30) Priority: 28.10.1994 IT VI940158
(43) Date of publication of application: 01.05.1996
(73) Proprietor: Tomasi, Adelino, 36070 Castelgomberto (Vicenza) (IT)
(72) Inventor: Tomasi, Adelino, 36070 Castelgomberto (Vicenza) (IT)
(74) Representative: Forattini, Amelia

(56) References cited:
- EP-A- 0 194 356
- EP-A- 0 545 013
- EP-A- 0 582 029
- EP-A- 0 611 715
- CH-A- 314 930
- DE-C- 3 604 611
- DE-C- 3 706 166
- GB-A- 955 148
- US-A- 2 735 684
- US-A- 4 645 368
- US-A- 5 253 949

## Description

The present invention relates to a quick-release end support, particularly for shafts for supporting rolls of paper, fabric, plastic film, coils of cables, tubes, and the like.

Commonly, in order to allow easy movement and handling of the rolls, the roll supporting shafts are mounted on pairs of quick-release end supports that can be connected to a motor means for turning the supported shaft.

A conventional type of end support includes a sleeve that rotatably accommodates a shaft which has a protruding end. The protruding end forms an open seat for snugly accommodating an end tang of a roll supporting shaft.

The tang is inserted radially in the seat and is locked by a locking means comprising a movable closure member. The movable closure member can be placed over the seat and is provided with a safety bolt constituted by a removable radial pin having an inner end inserted in a hole on the shaft.

EP-A-582029, EP-A-611715, and EP-A-194356 disclose end supports of the above type having quick release mechanisms.

EP-A-582029 discloses the features of the preamble of the appended claim 1.

A first drawback of conventional supports is the difficult radial insertion and precise positioning of the tang of the roll supporting shaft in the open seat, especially with tangs that have a substantially polygonal or square cross-section.

Another drawback, which can occur above a certain rotation speed, is the accidental release of the safety bolt, with the consequent opening of the support, when the centrifugal force exceeds the spring contrast force. The size of the spring cannot in fact be increased, because a strong spring would make it difficult to actuate the pin.

Another drawback, which derives from the previous one, is the early wear of the cam and of the seat where it acts, due to the mutual contact that occurs periodically when the support tends to open. This makes the support substantially inefficient, since the cam is generally formed directly on the sleeve and is therefore not easily replaceable.

Another drawback of conventional supports is that they are not normally reversible, that is to say, it is not possible to swap the right support of a roll supporting shaft with the left one, without performing expensive modifications. This increases production costs in addition to reducing operating flexibility.

The aim of the invention is to eliminate the drawbacks described above by providing an end support provided with a means for facilitating the insertion and precise centering of the tang of the supported axis.

An object of the invention is to provide a support that ensures perfect closure of the open seat even with high rotation speeds, for example in the order of 2000 rpm.

A further object is to provide a support in which the parts that wear the most are interchangeable and easily replaceable.

Still a further object is to provide a reversible support that can be equally connected, without expensive modifications, to either of the two end tangs of a roll supporting shaft.

This aim, these objects, and others which will become apparent hereinafter are achieved by an end support as claimed in the appended claims.

Preferably, the bottom portion of the seat has a transverse cross-section that is substantially V-shaped, with a vertex angle of 90°. With this shape, even a tang having a square transverse cross-section is easily accommodated.

The retention means includes a closure member, which is mounted on a substantially toroidal actuation member, which can move axially from a position in which it is offset with respect to the seat to a position that is placed over the seat, in which it can be locked by a safety bolt that includes a pin that is inserted in a hole formed along a secant of the toroidal member. Preferably the pin has a central portion that can be inserted in a tangential slot of the shaft to rigidly couple it to the closure member when the member is placed over the open seat. This configuration of the bolt ensures perfect locking of the tang, avoiding accidental openings of the support even with high shaft rotation rates.

The pin can be inserted in the hole on opposite sides to reverse the position of the control button, allowing actuation from the right or from the left of the support. In this manner, the support is reversible and can be connected to either end of a roll supporting shaft, with lower production costs and greater flexibility in use.

These and other advantages will become apparent from the detailed description of some preferred but not exclusive embodiments of an end support according to the invention, described by way of non-limitative example with the aid of the accompanying drawings, wherein:

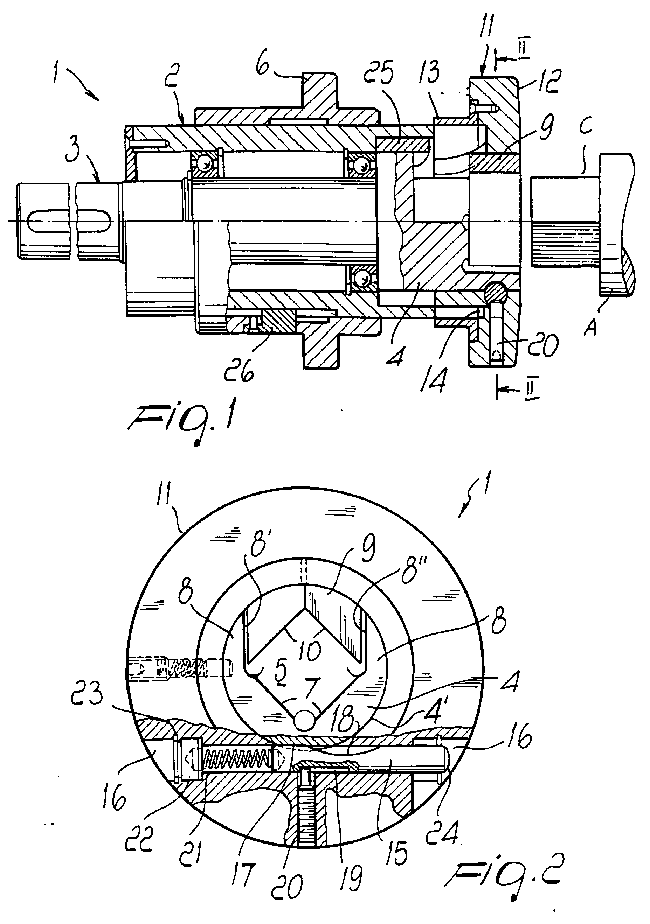

Figure 1 is a partially sectional side view, taken along an axial plane, of a first embodiment of the support according to the invention;
Figure 2 is a front view of the support of Figure 1, partially sectioned according to the cross plane II-II of Fig. 1;
Figure 3 is an enlarged view of a detail of the support of Figure 1;
Figure 4 is an exploded view of a detail of Figure 2.
Figure 5 is a front view of a detail of a second embodiment of the support according to the invention, partially sectioned according to a cross plane;
Figure 6 is a partially sectioned view, according to the plane VI-VI of Figure 5;
Figure 7 is an exploded view of a detail of Figure 5.

With reference to the above figures, the end support according to the invention, generally designated by the reference numeral 1, includes a stationary sleeve 2, in which a shaft 3 is rotatably accommodated. The shaft 3 has a substantially cylindrical axial end 4, which is milled in the center to form an upwardly open seat 5 for the snug-fit accommodation of an end tang C of a roll supporting shaft A.

The sleeve 2 is provided with a flange 6 for anchoring to a supporting frame, for example of a rolling machine.

According to the invention, the open seat 5 has a bottom portion 7 having a substantially V-shaped transverse cross-section, with a vertex angle of 90°. Portion 7 is suitable to accommodate tangs C that have a substantially square transverse cross-section.

The bottom portion 7 is connected to a peripheral portion 8 formed by two side walls 8', 8'' that are flared slightly outward and are suitable to guide the quick insertion of the tang C and allow its automatic centering.

In a further embodiment, not shown in the figures, the bottom portion 7 of the seat 5 can have a substantially U-shaped transverse cross-section, with sharp corners, without thereby abandoning the scope of the invention.

The tang C can be selectively locked in the seat 5 by a retention means suitable to prevent the radial escape of the tang during the rotation of the shaft 3. The retention means includes a closure member 9 adapted to move axially between a position in which it is placed fully over the seat 5 and a position that is axially offset with respect to the seat 5 to allow the extraction and/or insertion of the tang C in a radial direction.

The closure member 9 has a radially internal surface 10 whose transverse cross-section is shaped substantially like an inverted V and is shaped complementarily with respect to the surface of the tang C that faces it. The closure member 9 is anchored to an actuation member 11 that has a substantially toroidal shape and is mounted coaxially, with minimal play, on the protruding end 4 of the shaft 3.

The toroidal member 11 has a substantially flat outer face 12 and, on the opposite face, an axially protruding portion 13 with an annular slot 14 adapted to accommodate the end of the sleeve 2 that faces it.

The toroidal member 11 can be moved longitudinally with respect to the shaft 3, by an extent that is substantially equal to, or greater than, the length L of the portion of the tang C that is accommodated in the seat 5, in order to move the closure member 9 selectively into a position in which it is superimposed on the seat 5 or into a position in which it is offset with respect to the seat.

The retention means furthermore includes a safety bolt constituted by a pin 15 slidingly inserted in a transverse through hole 16. Hole 16 is formed along a secant of the toroidal member 11 in a position which is substantially tangent to the outer peripheral surface 4' of the protruding end 4 of the shaft 3.

A tangential transverse recess 17 is formed on the peripheral surface 4' and is adapted to interact with pin 15 to rigidly couple the toroidal member 11 to the shaft 3 when the closure member 9 is superimposed on the seat 5.

The pin 15 has a tangential cutout 18, in an intermediate position. Cutout 18 is shaped like a circular arc having a radius substantially equal to the axis lying at right angles to pin 15 to allow the release and free longitudinal sliding of the toroidal member 11, and therefore of the closure member 9, in a centered position with respect to the shaft 3.

Furthermore, a longitudinal slot 19 of preset length is formed in the pin 15. The end of a anti-rotation key 20 is inserted in the slot 19. Key 20 is also adapted to limit the sliding of the pin 15 along its own axis.

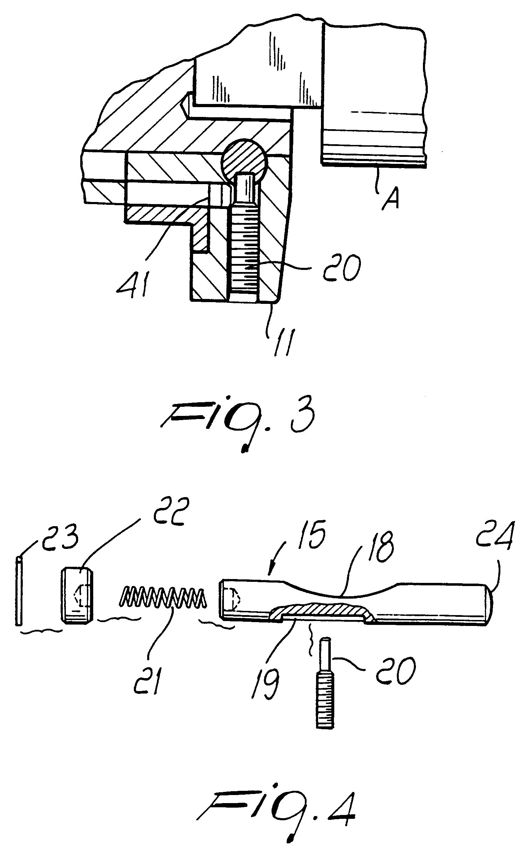

As illustrated in Figure 2, a contrast spring 21, abutting a cylinder 22, acts on an end of pin 15.

Cylinder 22 is axially locked by an elastic ring 23 arranged in an annular seat formed in hole 16 of toroidal member 11 to keep the pin normally shifted to the right in a position locking tang C.

The opposite end of pin 15 is slightly curved to form a control button 24 for releasing the pin from outside.

Pin 15 can be mounted from opposite ends in the hole 16 to reverse the position of control button 24, allowing the actuation of the support 1 from the right or from the left.

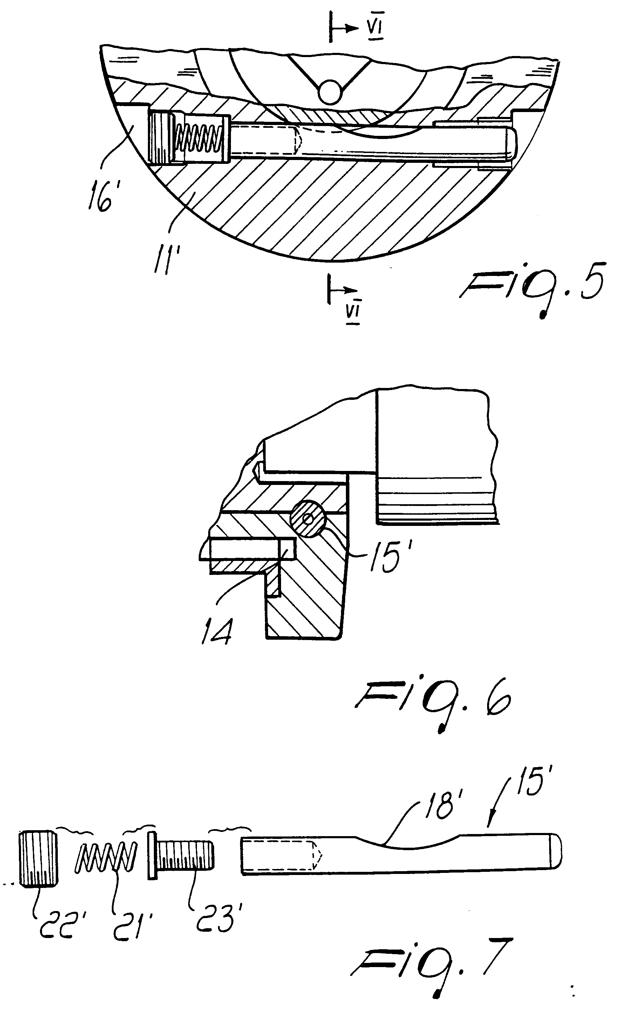

The embodiment shown in Figures 5 to 7 has a different arrangement of the locking pin, designated by the numeral 15', which is arranged in a through hole 16', formed in a toroidal member 11'.

The left end of pin 15' has a threaded hole for a screw 23'. The enlarged head of screw 23' forms a stop end abutment to the rightward motion of pin 15'. A contrast spring 21' acts on the enlarged head of screw 23' and is retained by a locking nut 22' screwed in a threaded end of hole 16'.

In this embodiment too, the opposite end is curved to form a control button.

This embodiment of pin 15' is constructively simpler than the above described one because it lacks a longitudinal slot and an anti-rotation key and is therefore also more economical.

A means for the automatic closure of the open seat 5, acting upon the first rotation of the shaft, includes a cam 25 formed on the sleeve 2 and having an approximately triangular shape. Cam 25 interacts, in a longitudinal direction, with a complementarily shaped seat formed on toroidal member 11 at the protruding portion 13.

When the support 1 is open, cam 25 moves the toroidal member 11 away, towards the protruding end 4 of shaft 3, moving the closure member 9 from the offset position to a position superimposed on the seat 5, due to the initial rotation of shaft 3. Cam 25 may be applied the sleeve 2 by means of screws, or an equivalent means, so that it can be easily replaced when worn.

Open seat 5 may be directly milled on the protruding end of the shaft and may be hardened by means of adapted heat treatments, but it may also be formed by applied hard metal inserts without departing from the scope of the invention.

The total surface of the open seat and of the closure member in contact with the tang is greater, on the average, than conventional supports of equal size, with evident mechanical advantages for torque transmission and lower wear of the surfaces in contact.

In the embodiment shown in the figures, the flange 6 for anchoring the support 1 is keyed to the outside of the sleeve 2 and is locked in a position that can be adjusted axially by means of a key 26. It should be noted that, in a further embodiment, the flange can be formed monolithically with the sleeve.

## Claims

1. End support, particularly suitable for selective coupling to an end tang (C) of a roll supporting shaft, wherein said tang (C) has at least one faceted surface for the transmission of a driving torque, said support comprising:
a stationary sleeve (2) that can be anchored to a supporting frame;
a shaft (3) that is rotatably accommodated in said sleeve (2) with an end (4) protruding axially from said sleeve;
an open seat (5) in the protruding end (4) of said shaft (3) with a bottom portion (7) shaped complementarily with respect to said tang (C) to accommodate it snugly;
a retention means to selectively lock said open seat (5) to prevent the radial escape of said tang (C);
said open seat (5) having a peripheral portion (8) connected to said bottom portion (7) and having side walls (8',8''), flared slightly outward, for the quick insertion and automatic centering of said tang (C);
said retention means comprises a closure member (9) anchored to a substantially toroidal actuation member (11) that is coupled with minimal play to the protruding end (4) of said shaft (3);
said retention means comprising a safety bolt constituted by a pin (15) that is slidingly inserted in a transverse through hole (16) of said toroidal member (11) that is substantially tangent to the outer surface (4') of the protruding end (4) of said shaft (3);
said pin (15) having a contrast spring (21), at one end, and a control button (24) at the opposite end
characterized in that
said closure member (9) can move axially between a position in which it is fully superimposed on said seat (5) and a position that is axially offset with respect to said seat (5) for the radial extraction of said tang (C);
said pin (15) can be mounted from opposite ends in said hole (16) to reverse the position of said control button (24), allowing the actuation of said support (1) from either right or left hand side.

2. End support according to claim 1, characterized in that said bottom portion (7) of said seat (5) has a substantially V-shaped transverse cross-section with a vertex angle of 90°, to accommodate a tang (C) that has a substantially square transverse cross-section.

3. End support according to claim 1, characterized in that said bottom portion (7) of said seat (5) has a substantially U-shaped transverse cross-section with sharp corners.

4. End support according to claim 1, characterized in that it comprises a tangential recess (17), on the outer surface (4') of the protruding end of said shaft (3), said tangential recess (17) being adapted to accommodate said pin (15) to rigidly couple said toroidal member (11) to said shaft (3), placing said closure member over said seat.

5. End support according to claim 1, characterized in that said pin (15) has a tangential cutout (18), on its cylindrical surface, said cutout (18) being shaped like a circular arc with an axis that lies at right angles to the axis of the pin (15) to allow, in a centered position with respect to the shaft (3), the free longitudinal sliding of the closure member (9) and its offset with respect to said seat (5).

6. End support according to claim 1, characterized in that said pin (15) has a longitudinal groove (19) cooperating with a key (20), said key (20) being rigidly coupled to said toroidal member (11) and being adapted to prevent the rotation of said pin (15) in said hole (16) and limit its longitudinal sliding.

7. End support according to claim 1, characterized in that said pin (15') has threaded hole at the opposite end of said control button, said threaded hole being adapted to accommodate a screw (23') having an enlarged head forming a stop end abutment for limiting the longitudinal motion of said pin (15').

8. End support according to claim 6, characterized in that said pin (15, 15') can be inserted from opposite ends in said hole (16, 16') to reverse the position of said control button (24, 24').

9. End support according to one or more of the preceding claims, characterized in that it comprises a means for automatically closing said open seat (5), said means comprising a cam (25) applied to said sleeve (2) and interacting in a longitudinal direction with a complementarily shaped seat (24) formed on said toroidal member (11).

## Patentansprüche

1. Endhalterung, besonders geeignet für selektives Ankuppeln an einen Endzapfen (C) einer Rollenabstützwelle, wobei der Zapfen (C) mindestens eine facettierte Oberfläche zur Übertragung eines antreibenden Drehmoments besitzt, die Endhalterung umfaßt:
eine stationäre Hülse (2), die an einem tragenden Gestell verankert werden kann;
eine Welle (3), die in der Hülse (2) drehbar aufgenommen wird mit einem Ende (4), das in axialer Richtung aus der Hülse herausragt;
eine offene Aufnahme (5) in dem herausragenden Ende (4) der Welle (3) mit einem unteren Bereich (7), der komplementär geformt ist in Bezug auf den Zapfen (C), um diesen bündig aufzunehmen;
ein Haltemittel, um wahlweise die offene Aufnahme (5) zu arretieren, um den radialen Austritt des Zapfens (C) zu verhindern;
die offene Aufnahme (5) besitzt einen äußeren Bereich (8), der mit dem unteren Bereich (7) verbunden ist, und Seitenwandungen (8', 8''), die leicht nach außen erweitert sind, zur schnellen Einführung und automatischen Zentrierung des Zapfens (C);
das Haltemittel ein Verschlußglied (9) umfaßt, das an einem im wesentlichen ringförmigen Betätigungsglied (11) befestigt ist, das mit geringem Spiel mit dem herausragenden Ende (4) der Welle (3) verbunden ist;
das Haltemittel einen Sicherheitsbolzen umfaßt, der durch einen Stift (15) gebildet wird, der verschiebbar eingesetzt ist in einer querverlaufenden Durchgangsbohrung (16) des ringförmigen Glieds (11), das im wesentlichen berührend zu der äußeren Oberfläche (4') des herausragenden Endes (4) der Welle (3) ist;
der Stift (15) an einem Ende eine Kontrastfeder (21) und am gegenüberliegenden Ende einen Drehknopf (24) besitzt,
dadurch gekennzeichnet, daß
das Verschlußglied (9) sich axial bewegen kann zwischen einer Position, in der es vollständig auf der Aufnahme (5) aufgesetzt wird, und einer Position, die axial versetzt ist in Bezug auf die Aufnahme (5) zur radialen Entnahme des Zapfens (C);
der Stift (15) von gegenüberliegenden Enden in der Bohrung (16) montiert werden kann, um die Position des Drehknopfs (24) umzukehren, und die Betätigung der Halterung (1) entweder von der rechtsdrehenden oder von der linksdrehenden Seite ermöglicht wird.

2. Endhalterung nach Anspruch 1, dadurch gekennzeichnet, daß der untere Bereich (7) der Aufnahme (5) einen im wesentlichen V-förmigen Querschnitt besitzt, mit einem Scheitelwinkel von 90°, um einen Zapfen (C) aufzunehmen, der einen im wesentlichen quadratischen Querschnitt besitzt.

3. Endhalterung nach Anspruch 1, dadurch gekennzeichnet, daß der untere Bereich (7) der Aufnahme (5) einen im wesentlichen U-förmigen Querschnitt mit spitzen Ecken besitzt.

4. Endhalterung nach Anspruch 1, dadurch gekennzeichnet, daß die Endhalterung eine tangentiale Ausnehmung (17) auf der äußeren Oberfläche (4') des hervorstehenden Endes der Welle (3) besitzt, die tangentiale Ausnehmung (17) angepaßt ist, um den Stift (15) aufzunehmen, um das ringförmige Glied (11) starr mit der Welle (3) zu koppeln, wobei das Verschlußglied oberhalb der Aufnahme plaziert wird.

5. Endhalterung nach Anspruch 1, dadurch gekennzeichnet, daß der Stift (15) eine tangentiale Aussparung (18) auf seiner zylindrischen Oberfläche besitzt, die Aussparung wie ein kreisförmiger Bogen geformt ist mit einer Achse, die im rechten Winkel zu der Achse des Stifts (15) liegt, um in einer zentrierten Position in Bezug auf die Welle (3) das freie longitudinale Gleiten des Verschlußglieds (9) und dessen Versetzung in Bezug auf die Aufnahme (5) zu gestatten.

6. Endhalterung nach Anspruch 1, dadurch gekennzeichnet, daß der Stift (15) eine Längsnut (19) besitzt, die mit einem Schlüssel (20) zusammenarbeitet, der Schlüssel (20) starr mit dem ringförmigen Glied (11) starr verbunden ist und angepaßt ist, um die Rotation des Stifts (15) in der Bohrung (16) zu verhindern und dessen longitudinales Gleiten zu begrenzen.

7. Endhalterung nach Anspruch 1, dadurch gekennzeichnet, daß der Stift (15') eine mit einem Gewinde versehene Bohrung auf der gegenüberliegenden Seite des Drehknopfs besitzt, die mit dem Gewinde versehene Bohrung angepaßt ist, um eine Schraube (23') aufzunehmen, die einen vergrößerten Kopf besitzt, der ein Anschlagsendwiderlager ausbildet zur Begrenzung der longitudinalen Bewegung des Stifts (15').

8. Endhalterung nach Anspruch 6, dadurch gekennzeichnet, daß der Stift (15, 15') von gegenüberliegenden Enden in die Bohrung (16, 16') eingeführt werden kann, um die Position des Drehknopfs (24, 24') umzukehren.

9. Endhalterung nach einem oder mehreren der vorangehenden Ansprüche, dadurch gekennzeichnet, daß die Endhalterung ein Mittel aufweist zur automatischen Absperrung der offenen Aufnahme (5), das Mittel eine Nocke (25) aufweist, die an der Hülse (2) angebracht ist und in longitudinaler Richtung zusammenwirkt mit einer komplementär ausgebildeten Aufnahme (24), die auf dem ringförmigen Glied (11) ausgebildet ist.

## Revendications

1. Support d'extrémité convenant en particulier à l'accouplement sélectif d'un embout d'entraînement (C) d'un arbre porteur d'un rouleau, où ledit embout d'entraînement (C) a au moins une surface façonnée pour la transmission d'un couple d'entraînement, ledit support comprenant:
un manchon stationnaire (2) qui peut être ancré sur un cadre de support;
un arbre (3) logé de façon rotative dans ledit manchon (2), ayant une extrémité (4) se projetant axialement à partir dudit manchon;
un logement ouvert (5) ménagé dans l'extrémité saillante (4) dudit arbre (3), ayant une partie de fond (7) configurée de façon complémentaire par rapport audit embout d'entraînement (C), de manière à l'épouser étroitement;
un moyen de retenue permettant de verrouiller de façon sélective ledit logement ouvert (5) de manière à empêcher la sortie radiale dudit embout d'entraînement (C);
ledit logement ouvert (5) ayant une partie périphérique (8) reliée à ladite partie de fond (7) et comprenant des parois latérales (8', 8'') légèrement évasées vers l'extérieur, pour une insertion rapide et un centrage automatique dudit embout d'entraînement (C);
ledit moyen de retenue comprenant un élément de fermeture (9) ancré sur un élément actionneur (11) essentiellement annulaire, qui est accouplé avec un jeu minimal à l'extrémité saillante (4) dudit arbre (3);
ledit moyen de retenue comprenant un axe de sécurité constitué par une broche (15) oui est insérée de façon coulissante dans un trou débouchant transversal (16) dudit élément annulaire (11), qui est globalement tangent à la surface extérieure (4') de l'extrémité saillante (4) dudit arbre (3);
ladite broche (15) comprenant au moins un ressort de rappel (21) disposé à l'une de ses extrémités, et un bouton de commande (24) à l'extrémité opposée;
caractérisé en ce que
ledit élément de fermeture (9) peut se déplacer axialement entre une position, dans laquelle il est entièrement superposé audit logement (5), et une position qui est axialement décalée par rapport audit logement (5) en vue de l'extraction radiale dudit embout d'entraînement (C);
ladite broche (15) peut être montée depuis des extrémités opposées dans ledit trou (16) de manière à inverser la position dudit bouton de commande (24), permettant ainsi l'actionnement dudit support (1) depuis le côté droit ou depuis le côté gauche.

2. Support d'extrémité selon la revendication 1, caractérisé en ce que ladite partie de fond (7) dudit logement (5) présente une section transversale essentiellement formée en V, ayant un angle de sommet de 90°, pour accueillir un embout d'entraînement (C) qui présente une section transversale essentiellement carrée.

3. Support d'extrémité selon la revendication 1, caractérisé en ce que la partie de fond (7) dudit logement présente une section transversale essentiellement configurée en U, ayant des angles vifs.

4. Support d'extrémité selon la revendication 1, caractérisé en ce qu'il comprend un évidement tangentiel (17) à la surface extérieure (4') de l'extrémité saillante dudit arbre (3), ledit évidement tangentiel (17) étant conçu pour loger ladite broche (15) de manière à accoupler rigidement ledit élément annulaire (11) audit arbre (3), plaçant ledit élément de fermeture sur ledit logement.

5. Support d'extrémité selon la revendication 1, caractérisé en ce que ladite broche (15) comporte une découpe tangentielle (18) ménagée dans sa surface cylindrique, ladite découpe (18) étant configurée comme un arc de cercle ayant un axe qui se situe à angle droit par rapport à l'axe de la broche (15), de manière à permettre, en une position centrée par rapport audit arbre (3), le mouvement de glissement longitudinal libre de l'élément de fermeture (9) et son décalage par rapport audit logement (5).

6. Support d'extrémité selon la revendication 1, caractérisé en ce que ladite broche (15) comporte une rainure longitudinale (19) qui coopère avec une clavette (20), ladite clavette (20) étant rigidement couplée audit élément annulaire (11) et étant conçue pour empêcher la rotation de ladite broche (15) dans ledit trou (16) et pour limiter son déplacement longitudinal.

7. Support d'extrémité selon la revendication 1, caractérisé en ce que ladite broche (15') comporte, à l'extrémité opposée audit bouton de commande, un trou taraudé, ledit trou taraudé étant conçu pour recevoir une vis (23') ayant une tête élargie formant un taquet de butée destiné à limiter le mouvement longitudinal de ladite broche (15').

8. Support d'extrémité selon la revendication 6, caractérisé en ce que ladite broche (15, 15') peut être insérée depuis des côtés opposés dans ledit trou (16, 16') de manière à inverser la position dudit bouton de commande (24, 24').

9. Support d'extrémité selon l'une ou plusieurs des revendications précédentes, caractérisé en ce qu'il comprend un moyen permettant de fermer automatiquement ledit logement (5), ledit moyen comprenant une came (25) appliquée audit manchon (2) et coopérant dans une direction longitudinale avec un logement (24) de forme complémentaire aménagé dans ledit élément annulaire (11).
